# EUROPEAN PATENT SPECIFICATION

(11) **EP 2 962 892 B1**
(45) Date of publication and mention of the grant of the patent: **18.04.2018**
(21) Application number: 13874440.4
(22) Date of filing: 04.12.2013
(51) Int. Cl.: B60N 2/28, B60N 2/427, B60N 2/42

(54) **VEHICLE SEAT**
FAHRZEUGSITZ
SIÈGE DE VÉHICULE

(30) Priority: 05.02.2013 JP 2013020181
(43) Date of publication of application: 06.01.2016
(73) Proprietor: TACHI-S CO., LTD., Akishima-shi, Tokyo 196-8611 (JP)
(72) Inventor: IMAYOU, Kazuya, Akishima-shi Tokyo 196-8611 (JP); IGARASHI, Toshiki, Akishima-shi Tokyo 196-8611 (JP); HONDA, Masaaki, Akishima-shi Tokyo 196-8611 (JP); HIRANO, Yayoi, Akishima-shi Tokyo 196-8611 (JP)
(74) Representative: Prüfer & Partner mbB Patentanwälte · Rechtsanwälte
(86) International application number: PCT/JP2013/082519
(87) International publication number: WO 2014/122841

(56) References cited:
- FR-A1- 2 947 778
- GB-A- 2 424 921
- JP-A- 2001 105 940
- JP-A- 2002 104 035
- JP-A- 2002 211 287
- JP-A- 2002 219 976
- JP-A- 2002 225 602
- JP-A- 2002 301 968
- JP-A- 2004 268 668
- JP-A- 2005 335 481
- JP-A- 2009 012 552
- JP-A- 2011 162 059
- JP-B1- 5 112 567

## Description

### BACKGROUND OF THE INVENTION

### 1. Field of the Invention

This invention relates to a vehicle seat having anchors that accord with the ISO-FIX standard and can hold an ISO-FIX type child seat.

### 2. Description of the Related Art

JP 2009 012552 A discloses a child seat locking structure in which a mounting bracket is installed on a pipe frame extending between floor side brackets, and with a lower anchor engaged with an anchorage of the child seat placed on the lower surface of the mounting bracket, the mounting bracket is bolted for locking.

The ISO-FIX standard is known as international standard of systems for holding child seats to vehicle seats. A vehicle seat is disclosed in, for example, JP 2002-211287A. The vehicle seat has anchors that accord with the ISO-FIX standard, and can hold an ISO-FIX type child seat.

The child seat of ISO-FIX type has a pair of engagement members, i.e., left and right members, at the rear part. The engagement members are fastened to anchors. The anchors may be arranged at, for example, the rear edge of the seat cushion of a vehicle seat.

An anchor is known, which has been formed by bending a wire member (or solid rod member). The anchor has a pair of side bars (i.e., left and right side bars) and a front bar. The left and right side bars extend forwards and parallel to each other. The front bar couples the left and right side bars, and the anchor is substantially U-shaped as seen in the plan view. The engagement members at the rear part of the child seat have an elongate groove in the distal end. If the distal ends of the engagement members, each having a groove, are engaged with the front bars of the anchors, the child seat will be secured to the anchors.

Two anchors are secured to a connecting pipe that extends between, for example, the rear ends of the left and right side frames of a seat cushion frame.

JP 2002-211287A describes that the rear ends of the side bars of each anchor are wound around the connecting pipe, from the upper part to rear part of the circumferential surface of the connecting pipe. The rear ends of the side bars, so wound, are covered with brackets from back to front. The rear ends of the side bars and the brackets are secured to the connecting pipe by means of welding. The front ends of the left and right side bars extend forwards from the upper part of the connecting pipe in a substantially horizontal direction, and are then coupled by the front bar.

Patent Literature: Japanese Patent unexamined Publication JP 2002-211287A

If the car is hit at the rear or makes an abrupt stop, a load will act on the child seat. The load is transmitted via the engagement members of the child seat to the front bar of each anchor. Each anchor receives the load, because of its flexural rigidity.

Each anchor has its side bars secured, at lower end, to the connecting pipe, and its front bar coupled to the front ends of the side bars, and is therefore shaped supported like a cantilever. Hence, the side bars of the anchor undergo bending deformation and are bent downwards, unless they overcome the load the anchor receives.

In the invention of JP 2002-211287A, the rear ends of the side bars of the anchor, which are wound around the connecting pipe, are covered with the bracket and secured (welded) to the connecting pipe. The rear ends of the side bars are thereby firmly fixed to the connecting pipe. However, if the car is hit at the rear or makes an abrupt stop, a large load will acts on the child seat. In this case, the anchor may be greatly bent downwards, while winding the side bars around the front part of the connecting pipe, and may be excessively deformed.

JP 2002-211287A further describes a configuration which the rear ends of the side bars are wound around the rear circumference of the connecting pipe, from the lower surface, not from the upper surface, thus covering the lower surface of either rear end of the side bars. However, excessive deformation of the anchor cannot be prevented in this configuration, either.

The anchor receives a load, because of its flexural rigidity. Hence, if it is made of a wire member having a large diameter (i.e., thick wire), it can acquire a high flexural rigidity, and its deformation can be controlled. If the anchor is made of a thick wire, however, it will inevitably become not only expensive, but also heavy.

An object of this invention is to provide a vehicle seat, in which the anchors are made of a relatively thin wire member and can yet be prevented from being excessively deformed even if they receives a large load.

### SUMMARY OF THE INVENTION

The above mentioned object is achieved by a viehcle seat according to claim 1 of the present application.

A load larger than usual acts on the child seat when the car is hit at the rear or makes an abrupt stop. In an embodiment of this invention, the side bars of each anchor are deformed unless the flexural rigidity of the anchor withstands the load. Since the side bars of each anchor extend forward obliquely from an upright position, however, they undergo buckling deformation and are less deformed than when they undergo bending deformation. Further, as the side bars are deformed, the engagement member moves down and abuts on the bracket. Receiving the load, the bracket prevents the engagement member form moving down further, and preventing the side bars from being deformed further. Thus, the anchors are reliably prevented from being excessively deformed, without increasing their diameter.

### BRIEF DESCRIPTION OF THE DRAWINGS

FIG. 1 is a schematic side view of a vehicle seat according to one embodiment of this invention;
FIG. 2 is a perspective view of an embodiment of the anchors and brackets used in the vehicle seat;
FIG. 3A is a partly sectional, side view of an embodiment of a child seat and one anchor having its side bars not deformed yet;
FIG. 3B is a partly sectional, side view of an embodiment of a child seat and one anchor having its side bars deformed.

### DETAILED DESCRIPTION OF THE INVENTION

### [Embodiment 1]

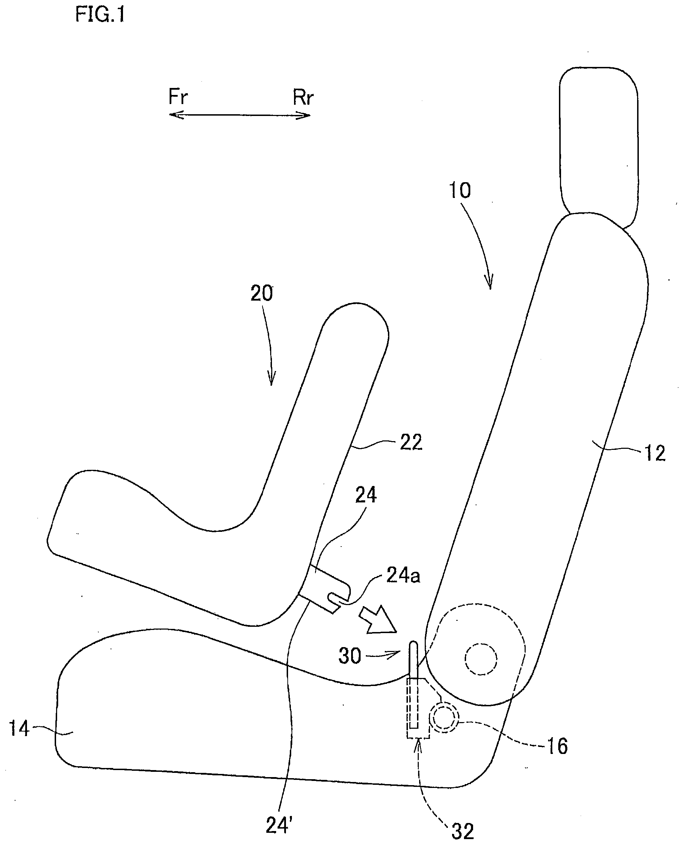

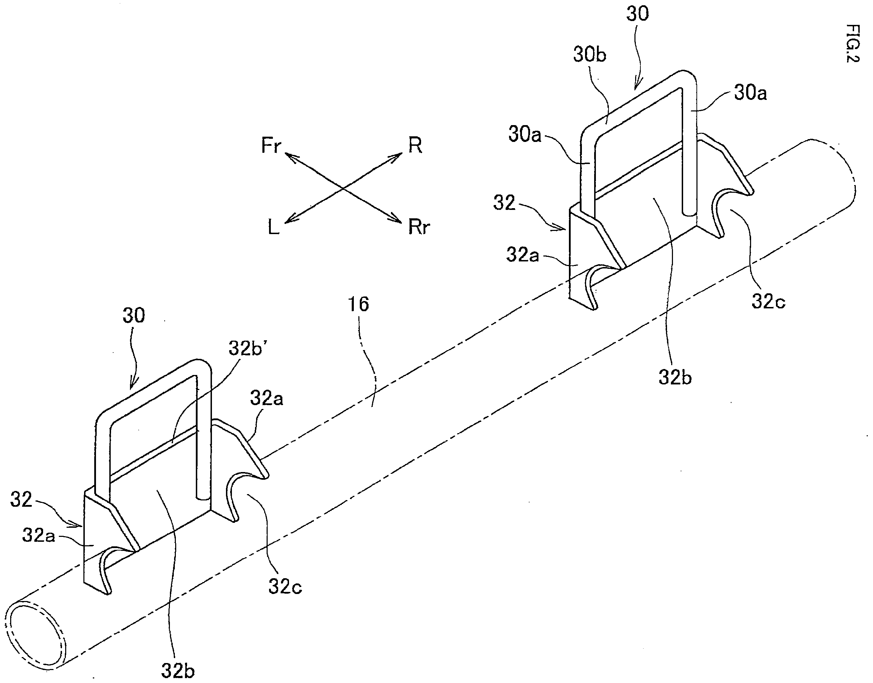

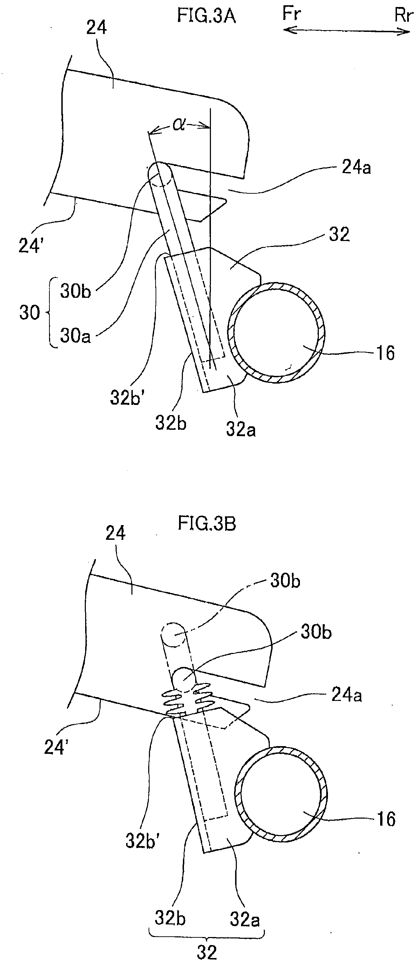

An embodiment of this invention will be described in detail, with reference to the accompanying drawings. FIG. 1 is a schematic side view of a vehicle seat according to one embodiment of this invention; FIG. 2 is a perspective view of an embodiment of the anchors and brackets used in the vehicle seat; FIG. 3A is a partly sectional, side view of an embodiment of a child seat and one anchor having its side bars not deformed yet; and FIG. 3B is a partly sectional, side view of an embodiment of a child seat and one anchor having its side bars deformed. In the drawings, arrows Fr and Rr indicate the forward and rearward directions, and arrows L and R indicate the leftward and rightward directions, with respect to the driver seated in the driver seat.

As shown in FIG. 1, an embodiments of the vehicle seat 10 has a seatback 12 and a seat cushion 14. Between the lower edge of the seatback 12 and the rear edge of the seat cushion 14, a seat reclining device (not shown) is arranged to recline the seatback to the seat cushion.

The seat cushion 14 is composed of a seat cushion frame, a pad and a trim cover. The seat cushion frame is the skeleton covered with the pad made of foamed material such as urethane foam. The pad is covered with the trim cover. The seat cushion frame comprises a pair of side frames 14f (i.e., left and right side frames), and front and rear connecting pipes extending, respectively, between the front ends of the left and right side frames 14f and between the rear ends thereof. Therefore, the side frames and the connecting pipes define a substantially rectangular frame as seen in the plan view. In FIG. 1, only the rear connecting pipe 16 is shown, which extends between the rear ends of the side frames 14f of the seat cushion 14. The connecting pipe 16 is made of a pipe member having a circular cross section, as in most cases. Nonetheless, the pipe member may have non-circular cross section.

At the rear edge of the seat cushion 14, a pair of anchors, i.e., left and right anchors 30 that accord with the ISO-FIX standard, are arranged and spaced apart from each other by a preset distance in the left-right direction of the vehicle seat 10. The anchors 30 can hold an ISO-FIX type child seat 20.

As shown in FIG. 1, the child seat 20 has a pair of engagement members 24, i.e., left and right engagement members, extending rearwards from the lower part of the back 22. Each engagement member 24 has an elongate groove 24a in the distal end. As shown in FIG. 2, the anchors 30 have been formed, each by bending a wire member. Each anchor 30 has left and right side bars 30a and a front bar 30b. The side bars 30a extend parallel to each other and forward obliquely from an upright position, and the front bar 30b couples the side bars 30a at the upper end. Hence, each anchor 30 is substantially U-shaped as seen in the plan view.

As the arrow shows in FIG. 1, the child seat 20 may be moved toward the front of the seatback 12 until the front bars 30b of the anchors 30 are engaged, respectively in the elongate grooves 24a of the left and right engagement members 24. The child seat 20 is thereby held by the anchors 30 and arranged on the seat cushion 14.

The anchors 30 are secured by brackets 32 to the connecting pipe 16 extending in the left-right direction, namely extending in a direction parallel to the front bars of the anchors[..1], and extends forward obliquely from an upright position. Each bracket 32 has been formed by pressing a steel plate, into a member substantially U-shaped as seen in the plan view and has left and right side walls 32a and a front wall 32b connecting the side walls. The left and right side bars 30a of each anchor 30 are secured, at a lower end of the left and right side bars, to the inner surface of the associated bracket 32, by means of welding. Nonetheless, the method of securing the side bars 30a to the bracket 32 is not limited to welding.

In the embodiment, the lower ends of the side bars 30a are secured, respectively to the inner surfaces of the side walls 32a and the front wall 32b, at the corner parts thereof, as shown in FIG. 2. Instead, the lower ends of the side bars 30a may be secured to the inner surface (back) of the front wall 32b, and spaced apart from the side walls 32a. However, if the lower ends of the side bars 30a are secured to the inner surfaces of the side walls 32a and the front wall 32b at the corner parts thereof, they can be welded, each to both the side wall and the front wall, and hence can be more firmly secured to the bracket 32.

The side wall 32a of each bracket 32 has, in the rear edge, a notch 32c shaped complement to the front part of the circumferential surface of the connecting pipe 16. The bracket 32 of each anchor 30 is secured, from the front, to the connecting pipe 16 and opposes the engagement member 24, with the notches 32c holding the front circumferential surface of the connecting pipe 16. At this point, the side bars 30a extend forward obliquely from an upright position. The bracket 32 is secured to the connecting pipe 16 by means of, for example, welding, so that as the side bars 30a are deformed, the side bars 30a and the engagement member 24 move down until the engaging member 24 abuts on the bracket 32.

As shown in FIG. 3A, the side bars 30a of each anchor extend forward from its upright position, inclining by an angle α of 15°. The inclination angle α is not limited to 15°, nevertheless. The inclination angle α only needs to have such a value as to cause the side bars 30a to undergo buckling deformation, not bending deformation. The inclination angle α is 10 to 25°.

The upper edge 32b' of the front wall 32b of the bracket is remoter from the connecting pipe 16 than any other parts of the bracket. This is why the bracket 32 is usually so positioned that the engagement member may abut, at lower surface 24' of the engaging member 24, on the upper edge of the front wall as it moves down. Nonetheless, the lower surface 24' of the engagement member does need to abut on the upper edge 32b' of the front wall of the bracket. For example, the bracket may lie at a position (i.e., below the engagement member 24) so that the engagement member 24 may abut on it, and may be prevented from moving down further.

In most cases, the child seat 20 is held to the seat 10 not only by engaging the engagement members 24 with the anchors 30, but also by using a tether belt. The tether belt is not directly related to this invention, and is not described herein.

The grooves 24a made in the left and right engagement members 24 are elongate in the embodiment. Nonetheless, the grooves 24a are not limited to elongate ones as far as they hold the anchors 30 (more precisely, front bars 30b), securing the child seat 20 to the seat cushion 14.

If the car is hit at the rear or makes an abrupt stop, a large load will acts on the child seat 20. The load is transmitted via the engagement members 24 of the child seat to the front bars 30b of the anchors 30. The anchors 30 receive the load, because of their flexural rigidity. Each anchor has its side bars 30a secured, at rear end, to the connecting pipe 16, and its front bar 30b coupled to the front ends of the side bars. Each anchor is therefore supported like a cantilever, with its front bar 30b coupled of the front ends of the side bars. Inevitably, the anchors receive a large load and may fail to withstand the load. In this case, the anchors, more precisely the side bars, are deformed.

In this invention, however, the side bars 30a of each anchor (see FIG. 3A) extend forward obliquely from an upright position. The side bars 30a therefore undergo buckling deformation (see FIG. 3B), not bending deformation. The buckling deformation is smaller than the bending deformation.

Moreover, the engagement members 24 of the child seat, which are engaged with the front bars 30b, move down as the side bars 30a are deformed. At this point, the brackets 32 lie below the engagement members 24, and the lower surfaces 24' of the engagement members, which are lowering, abut on the upper ends 32b' of the front walls 32b. As a result, the brackets 32 receives the load, and prevents the engagement members 24 from lowering, thus preventing the side bars 30a from being deformed.

Hence, even if the car is hit at the rear or makes an abrupt stop, a large load acts on the child seat 20 and is then transmitted via the engagement members 24 of the anchors 30, the anchors are reliably prevented from being excessively deformed, without increasing their diameter.

Since the notches 32c holding the front circumferential surface of the connecting pipe 16 are made in the rear edges of the side walls 32a, the brackets 32 are secured (welded) to the connecting pipe 16 over a sufficiently long distance. Thus, the brackets 32 are so firmly fastened to the pipe 16 that they can withstand the load transmitted from the child seat 20 to the anchors 30.

Moreover, the front wall 32b of each bracket extends at right angles to the left-right direction in which the associated engagement member 24 extends. Hence, the lower surface 24' of the engagement member reliably abut on the upper edge 32b' of the front wall even if the child seat 20 shifts in the left-right direction and then mounted on the seat 10.

The side bars of each anchor are supported by the bracket, and extend forward obliquely from an upright position. The bracket is positioned to abut on the associated engagement member of the child seat when the side bars are deformed. Hence, the side bars undergo buckling deformation and are not so much deformed as they undergo bending deformation. Further, as the side bars of the anchors are deformed, the engagement members move down and abut on the brackets. Receiving a load, the brackets prevent the engagement members from moving down further, preventing the deformation of the side bars. Thus, even if a large load acts on the anchors, the anchors are reliably prevented from being excessively deformed, without increasing their diameter.

The embodiments has been described to explain this invention, and are not intended to limit the scope of the invention. Accordingly, various changes and modifications may be made within the scope of the claims, and are of course included in this invention.

In the embodiment (Embodiment 1), the anchors are provided at the seat cushion. That is, the anchors are secured by brackets to the connecting pipe extending between the rear ends of the left and right side frames 14f of the seat cushion frame. Instead, the anchors may be provided at the seatback.

### INDUSTRIAL APPLICABILITY

This invention can be used in various types of vehicle seats having anchors for holding child seats of the ISO-FIX type.

### REFERENCE MARKS IN THE DRAWINGS

- 10: vehicle seat
- 12: seatback
- 14: seat cushion
- 16: connecting pipe
- 20: child seat
- 24: engagement member
- 24': lower surface
- 24a: elongate groove
- 30: anchor
- 30a, 30b: left and right side bars, front bar
- 32: bracket
- 32a, 32b: left and right side walls, front wall
- 32b': upper end
- 32c: notch

## Claims

1. A vehicle seat (10) for use with a child seat (20) having an engagement member (24) provided on the back; the vehicle seat (10) comprising
a seatback (12);
a seat cushion (14); and
a pair of anchors (30) structured to hold the child seat (20) of an ISO-FIX type, **characterized in that** each anchor (30) has a pair of left and right side bars (30a) and a front bar (30b) coupled to upper ends of the left and right side bars (30a), and is a U-shaped form as seen in a plan view, the front bars of the anchors (30) are structured to engage with the engagement member (24) provided on the back of the child seat (20), and the anchors (30) are secured by brackets (32) to a connecting pipe (16), provided in the seat cushion (14) or the seatback (12) extending in the left-right direction and extend forward obliquely inclined by an angle 10 to 25° from an upright position, the bracket (32), extending in a direction parallel to the front bars of the anchors (30), has left and right side walls (32a) and a front wall (32b) connecting the left and right side walls (32a), is formed by pressing a steel plate and is a U-shaped form as seen in a plan view; the left and right side bars (30a) of each anchor (30) are secured, at a lower end of the left and right side bars (30a), to inner surfaces of the side walls (32a) and the front wall (32b) at the corner parts thereof; notches (32c) shaped complement to the front part of a front circumferential surface of the connecting pipe (16) are made in rear edges of the side walls (32a) of the bracket (32), and the bracket (32) is secured, from the front, to the connecting pipe (16) and opposes the engagement member (24), with the notches (32c), while holding the front circumferential surface of the connecting pipe (16) in the notches, and is provided at a position where the engagement member (24) abuts on the bracket (32) when the side bars (30a) are deformed by an downward load transmitted to the front bar (30b) with which the engagement member (24) is engaged.

## Patentansprüche

1. Fahrzeugsitz (10) zur Verwendung mit einem Kindersitz (20) mit einem Eingriffsteil (24), welches auf der Rückseite vorgesehen ist;
wobei der Fahrzeugsitz (10) aufweist:
eine Rückenlehne (12);
ein Sitzkissen (14); und
ein Paar von Ankern (30), welche so strukturiert sind, den Kindersitz (20) eines ISO-FIX-Typs zu halten, **dadurch gekennzeichnet, dass** jeder Anker (30) ein Paar von linken und rechten Seitenbalken (30a) und einen Vorderbalken (30b) aufweist, welcher an obere Enden der linken und rechten Seitenbalken (30a) angeschlossen ist, und von vorne gesehen eine U-Form aufweist, wobei die Vorderbalken der Anker (30) so strukturiert sind, dass sie mit dem Eingriffsteil (24), welches auf der Rückseite des Kindersitzes (20) vorgesehen ist, in Eingriff stehen, und die Anker (30) durch Klammern (32) mit einem Verbindungsrohr (16) gesichert sind, welches im Sitzkissen (14) oder der Rückenlehne (12) angeordnet ist und welches sich in der Links-Rechts-Richtung erstreckt und sich schräg nach vorne erstreckt, geneigt durch einen Winkel von 10 bis 25°C von einer geraden Position, wobei die Klammer (32), welche sich in einer Richtung parallel zu den Vorderbalken der Anker (30) erstreckt, linke und rechte Seitenwände (32a) und eine Vorderwand (32b) aufweist, welche die linken und rechten Seitenwände (32a) verbindet, durch Pressen einer Stahlplatte ausgebildet ist, und eine U-förmige Form von vorne gesehen aufweist;
wobei die linken und rechten Seitenbalken (30a) jedes Ankers (30) an einem unteren Ende der linken und rechten Seitenbalken (30a) an innere Oberflächen der Seitenwände (32a) und die Vorderwand (32b) an Eckenteilen von dieser gesichert sind;
wobei Kerben (32c), die komplementär zum Vorderteil einer vorderen Umfangsoberfläche des Verbindungsrohrs (16) ausgebildet sind, in Rückecken der Seitenwände (32a) der Klammer (32) ausgebildet sind, und die Klammer (32) von der Vorderseite am Verbindungsrohr (16) gesichert ist und dem Eingriffsteil (24) mit den Kerben (32c) gegenüberliegt, während die vordere Umfangsoberfläche des Verbindungsrohrs (16) in der Kerbe gehalten wird, und in einer Position vorgesehen ist, wo das Eingriffsteil (24) an der Klammer (32) anliegt, wenn die Seitenbalken (30a) durch eine abwärts gerichtete Last, welche zum Vorderbalken (30b) übertragen wird, mit welchem das Einkaufsteil (24) in Eingriff steht, deformiert sind.

## Revendications

1. Siège de véhicule (10) destiné à être utilisé avec un siège d'enfant (20) comportant un élément de couplage (24) formé sur le dossier ; le siège de véhicule (10) comprenant:
un dossier de siège (12) ;
un coussin de siège (14) ; et
une paire d'éléments d'ancrage (30) structurés afin de maintenir le siège d'enfant (20) du type ISO-FIX, **caractérisé en ce que** chaque élément d'ancrage (30) comporte une paire de barres latérales gauche et droite (30a) et une barre avant (30b) couplée sur les extrémités supérieures des barres latérales gauche et droite (30a), et est en forme de U tel que vu sur une vue en plan, les barres avant des éléments d'ancrage (30) sont structurées de manière à se coupler avec l'élément de couplage (24) agencé sur le dossier du siège d'enfant (20), et les éléments d'ancrage (30) sont fixés par des supports (32) sur un tube de liaison (16), agencé sur le coussin de siège (14) ou le dossier de siège (12) s'étendant dans la direction transversale et s'étendent vers l'avant inclinés de manière oblique sous un angle de 10 à 25° par rapport à une position verticale, le support (32), s'étendant dans une direction parallèle aux barres avant des éléments d'ancrages (30), comporte des parois latérales gauche et droite (32a) et une paroi avant (32b) reliant les parois latérales gauche et droite (32a), est formé par emboutissage d'une tôle d'acier et est en forme de U, tel que vu sur une vue en plan ; les barres latérales gauche et droite (30a) de chaque élément d'ancrage (30) sont fixées, au niveau d'une extrémité inférieure des barres latérales gauche et droite (30a), sur les surfaces internes des parois latérales (32a) et de la paroi avant (32b), au niveau de leurs parties d'angle ; des encoches (32c) de forme complémentaire à la partie avant d'une surface circonférentielle avant du tube de liaison (16) sont réalisées sur des bords arrière des parois latérales (32a) du support (32), et le support (32) est fixé, à partir de l'avant, sur le tube de liaison (16) et est opposé à l'élément de couplage (24), avec les encoches (32c), tout en maintenant la surface circonférentielle avant du tube de liaison (16) dans les encoches, et est agencé à une position dans laquelle l'élément de couplage (24) vient en butée sur le support (32) lorsque les barres latérales (30a) sont déformées par une charge dirigée vers le bas transmise à la barre avant (30b) avec laquelle l'élément de couplage (24) est couplé.
